# EUROPEAN PATENT APPLICATION

(11) **EP 3 240 300 A1**
(43) Date of publication of application: **01.11.2017**
(21) Application number: 17150321.2
(22) Date of filing: 04.01.2017
(51) Int. Cl.: H04R 1/10, H04R 5/033, H01Q 1/44

(54) **CHARGING SYSTEM AND ELECTRONIC DEVICE HAVING SAME**

(30) Priority: 19.02.2016 US 201662297506 P
(71) Applicant: Erato (Cayman) Holdings Co., Ltd., 1-1208 Grand Cayman (KY)
(72) Inventor: CHEN, CHEN-CHUN, New Taipei City, Taiwan 235 (CN)
(74) Representative: Cordina, Kevin John

(57) **Abstract**

The present disclosure provides a charging system comprising a first charging module and a second charging module. The first charging module comprises a first charging electrode, a second charging electrode, a charge controller and at least one rechargeable battery. The first charging electrode and the second charging electrode are coupled to the charge controller. The charge controller is coupled to the rechargeable battery. The second charging electrode is substantially annular, and the first charging electrode is surrounded by the second charging electrode. The second charging module comprises a first dock electrode, a second dock electrode and a battery charger. When the first charging module and the second charging module are electrically coupled, the first charging electrode is electrically coupled to the first dock electrode, and the second charging electrode is electrically coupled to the second dock electrode.

## Description

### FIELD

The present disclosure herein generally relates to charging systems and electronic devices having the same.

### BACKGROUND

Charging electrodes are essential for restoring battery energy of an electronic device but can give many problems. For example, conventional charging electrodes have to be placed in a specific direction to fit a charging dock and thus form adequate electrical connections between a rechargeable battery in the electronic device and a battery charger. Such a directional limitation may lead to inconvenience, bad user experience, and even charge failure. Another example, a compact electronic device with an antenna may be improved upon to accommodate both charging electrodes and an antenna in a limited space where interference by the charging electrodes may affect the antenna.

In the present disclosure, the problems described above can be solved. The examples shown in the present disclosure are mostly around an earphone and may be applied to other wireless electronic devices.

### SUMMARY

The present disclosure generally relates to a charging system and an electronic device having the charging system. The charging system comprises a first charging module and a second charging module; wherein the first charging module comprises a first charging electrode, a second charging electrode, a charge controller and at least one rechargeable battery, the first charging electrode and the second charging electrode are coupled to the charge controller, the charge controller is coupled to the rechargeable battery, the second charging electrode is substantially annular, and the first charging electrode is surrounded by the second charging electrode; wherein the second charging module comprises a first dock electrode, a second dock electrode and a battery charger, the first dock electrode and the second dock electrode are coupled to the battery charger; wherein when the first charging module and the second charging module are electrically coupled, the first charging electrode is electrically coupled to the first dock electrode, and the second charging electrode is electrically coupled to the second dock electrode.

### BRIEF DESCRIPTION OF THE DRAWINGS

Many aspects of the present embodiments can be better understood with reference to the following drawings. The components in the drawings are not necessarily drawn to scale, the emphasis instead being placed upon clearly illustrating the principles of the present embodiments. Moreover, in the drawings, like reference numerals designate corresponding parts throughout the several views.
FIG. 1A is a block diagram of a first exemplary embodiment of a radiofrequency communication device.
FIG. 1B is an exploded view of one example of the first exemplary embodiment of the radiofrequency communication device of FIG. 1A.
FIG. 2A is a block diagram of a second exemplary embodiment of the radiofrequency communication device.
FIG. 2B is an exploded view of the second exemplary embodiment of the radiofrequency communication device of FIG. 2A.
FIG. 3A is a perspective view of a monopole closed loop antenna electrode of the radiofrequency communication device.
FIG. 3B is a perspective view of a monopole open loop antenna electrode of the radiofrequency communication device.
FIG. 3C is a perspective view of a dipole closed loop antenna electrode of the radiofrequency communication device.
FIG. 3D is a perspective view of a dipole open loop antenna electrode of the radiofrequency communication device.
FIG. 4 is a circuit block diagram of an exemplary embodiment of a wireless earphone.
FIG. 5 is a block diagram of an exemplary embodiment of a charging system.
FIG. 6A is a left-side view of an exemplary embodiment of an electronic device including the charging system.
FIG. 6B is a lateral view of another exemplary embodiment of the electronic device including the charging system.
FIG. 7A is a perspective view of one exemplary embodiment of the charging system of FIG. 6B.
FIG. 7B is a perspective view of another exemplary embodiment of the charging system of FIG. 6B.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. The drawings are not necessarily to scale and the proportions of certain parts may be exaggerated to better illustrate details and features. The description is not to be considered as limiting the scope of the embodiments described herein.

Several definitions that apply throughout this disclosure will now be presented.

The term "electrode" refers to an electrical conductor and does not limit the shape, material, or function of an electrode to any specific form of electrode. The term "coupled" is defined as connected, whether directly or indirectly through intervening components, and is not necessarily limited to physical connections. The connection can be such that the objects are permanently connected or releasably connected. The connection can be wireless communication via radiofrequency electromagnetic wave. The term "comprising," when utilized, means "including, but not necessarily limited to"; it specifically indicates open-ended inclusion or membership in the so-described combination, group, series and the like.

The present disclosure first provides a wireless communication device, such as a radiofrequency communication device.

The radiofrequency communication device may comprise an antenna electrode, a charging electrode, a transceiver module, a charge controller, and a rechargeable battery. The radiofrequency communication device may be embodied as a wireless earphone, an active stylus pen, a remote controller, or a pointer.

The antenna electrode is an antenna having capability of coupling to an electrode of a battery charger. The antenna electrode may be manufactured by printed circuit technology or by windings and/or soldering an electrical conductive wire. Even as an electrode, the antenna electrode also has a function as an antenna.

The antenna is an electrical device which converts electromagnetic wave into electrical power or converts electrical power into electromagnetic wave. The electrical power and the electromagnetic wave carry electrical signals for communication purpose. The antenna receives electrical power from a transceiver module through a transmission line, creates an oscillating electromagnetic field, and then transmits electromagnetic wave. Conversely, the antenna can receive electromagnetic wave, convert into electrical power, and deliver the electrical power to a transceiver module through a transmission line. The electromagnetic wave may have one or more radiofrequencies for specific application. For example, Industrial Scientific Medical (ISM) Bands are reserved internationally for communication or other purposes without regulatory limitation. Popular communication standards include BLUETOOTH and WI-FI, which have frequency range around 2.4GHz.

The charging electrode is configured to provide electrical connection between the rechargeable battery and the battery charger. The rechargeable battery may be an alkaline battery, a silver battery, a zinc-air battery, a mercury battery, a lithium battery, or the like. The rechargeable battery may be a button battery. The rechargeable battery is capable of providing electrical power for the electrical components in a radiofrequency communication device or other electronic devices.

The battery charger is configured to provide electrical power to a rechargeable battery. The battery charger may include a charging dock, dock electrodes, and a power source. The charging dock provides mechanical connection to the radiofrequency communication device or other electronic devices, and the dock electrodes provide electrical connection between the charging electrodes and the power source. The power source may be another rechargeable battery or household power line.

The charge controller is configured to modulate the electrical properties, including for example electrical current or electrical voltage, during charging process. Also, the charge controller may prevent circuit from electrical overload. The charge controller may be configured as a charge integrated circuit.

The transceiver module is configured to transmit or receive electrical signals from an antenna. The transceiver module may be coupled to the antenna through a transmission line. The transceiver module may be an ISM band transceiver module, such as a BLUETOOTH module or a WI-FI module or a proprietary transceiver module.

Additionally, the radiofrequency communication device may further include a switching module, which is configured to change the electrical connections between the electrical components according to input signal. The input signal may be electrical current, electrical potential difference, or signal frequency. The switching module may be an integrated circuit or a relay. Different input signals make the antenna electrode work as a charging electrode or as an antenna.

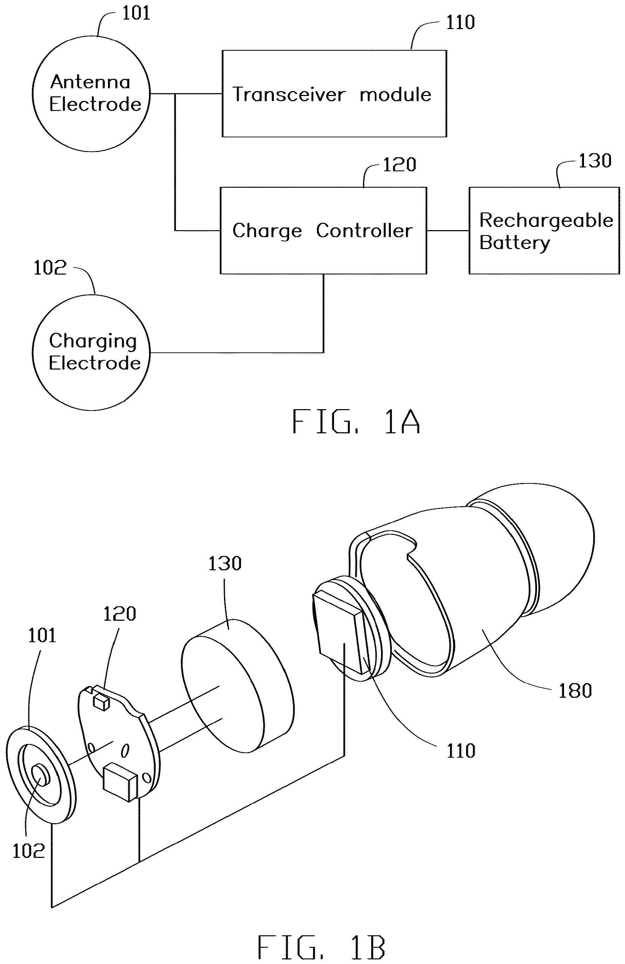

In a first exemplary embodiment of the radiofrequency communication device as shown in FIG. 1A, the radiofrequency communication device includes an antenna electrode 101, a charging electrode 102, a transceiver module 110, a charge controller 120, and a rechargeable battery 130. The antenna electrode 101 is configured to be coupled to the transceiver module 110 to receive the electrical power from the transceiver module 110 or to transmit the electrical power to the transceiver module 110. Both the antenna electrode 101 and the charging electrode 102 are coupled to the charge controller 120. The charging controller 120 receives electrical power from the antenna electrode 101 and the charging electrode 102 and delivers the electrical power to the rechargeable battery 130.

In one example of the first exemplary embodiment of the radiofrequency communication device, as shown in FIG. 1B, the radiofrequency communication device is embodied as a wireless earphone. Herein, the radiofrequency communication device includes an antenna electrode 101, a charging electrode 102, a transceiver module 110, a charge controller 120, and a rechargeable battery 130. The antenna electrode 101, the charging electrode 102, the transceiver module 110, the charge controller 120, and the rechargeable battery 130 are accommodated in an earphone housing 180.

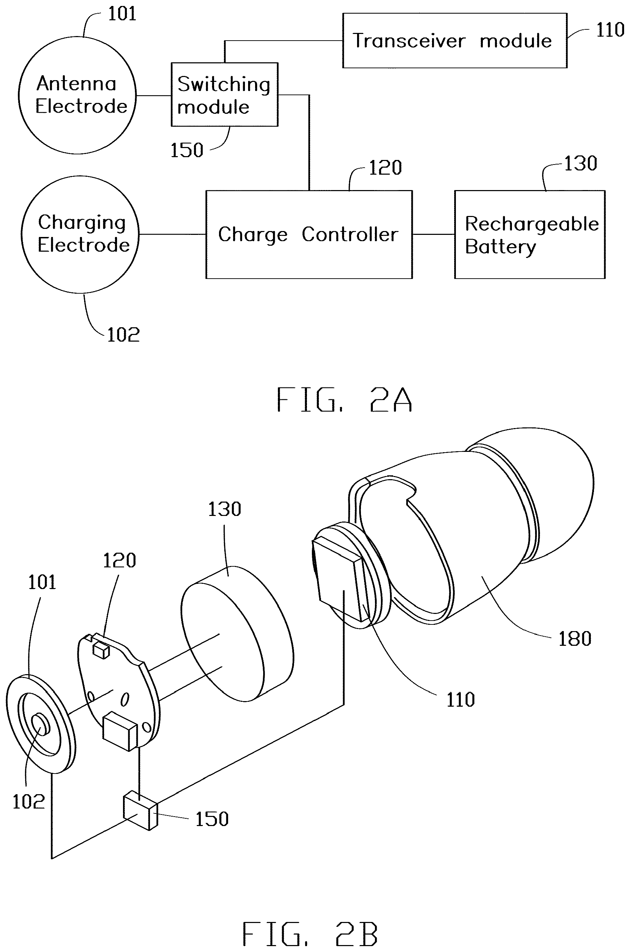

In a second exemplary embodiment of the radiofrequency communication device, as shown in FIG. 2A, the radiofrequency communication device includes an antenna electrode 101, a charging electrode 102, a transceiver module 110, a charge controller 120, a rechargeable battery 130, and a switching module 150. The charging electrode 102 is coupled to the charge controller 120. The switching module 150 is coupled to the antenna electrode 101, the charge controller 120, and the transceiver module 110. The switching module 150 is configured to determine whether the radiofrequency communication device is in communication mode or undergoing charging process. During charging process, the switching module 150 allows electrical connections between the antenna electrode 101 and charge controller 120, and reduces or may even inhibit electrical connection between the antenna electrode 101 and the transceiver module 110. Upon electrically coupled to an external electrical power source, the charging controller 120 receives electrical power from the antenna electrode 101 and the charging electrode 102, and delivers electrical power to the rechargeable battery 130. During communications process (i.e. in a communication mode), the switching module 150 allows electrical connections between the antenna electrode 101 and the transceiver module 110 to receive electrical power from the transceiver module 110 or to transmit electrical power to the transceiver module 110, while the switching module 150 reduces or may even inhibit electrical connections between the antenna electrode 101 and charge controller 120.

In one example of the second exemplary embodiment of the radiofrequency communication device, as shown in FIG. 2B, the radiofrequency communication device is embodied as a wireless earphone. The radiofrequency communication device includes an antenna electrode 101, a charging electrode 102, a transceiver module 110, a charge controller 120, a rechargeable battery 130, and a switching module 150. The antenna electrode 101, the charging electrode 102, the transceiver module 110, the charge controller 120, the rechargeable battery 130, and the switching module 150 are accommodated in an earphone housing 180.

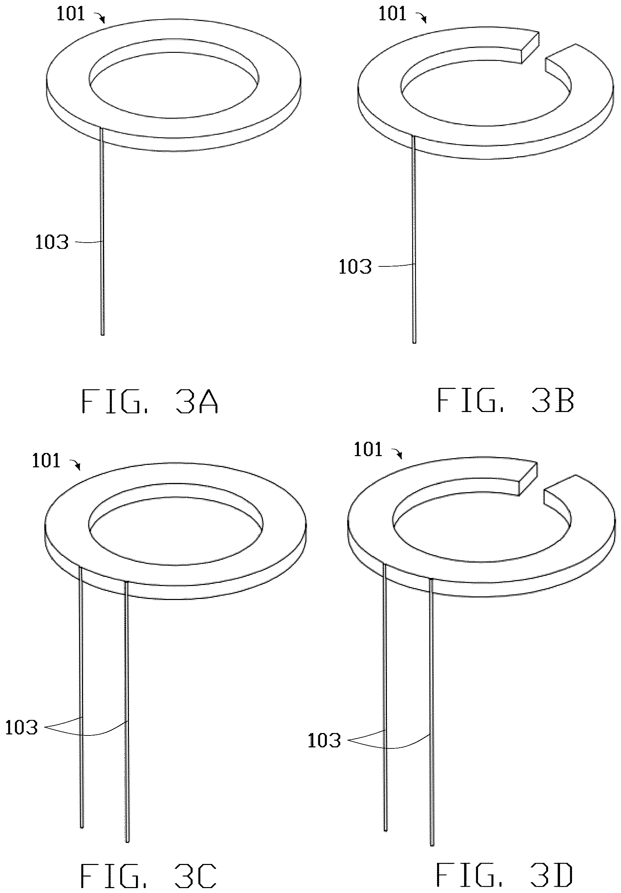

FIG. 3A-3D shows various examples of the antenna electrode of the radiofrequency communication device. The antenna electrode 101 may be a loop antenna with at least one feed 103. The perimeter of the antenna is configured to match a designated wavelength of electromagnetic wave. The perimeter of the antenna may be equal to one wavelength or one quarter of one wavelength. In one example, a perimeter of the loop antenna may be substantially 30.59 millimeters (mm) in order to receive 2.45GHz radiofrequency signals. It is contemplated that the perimeter of the antenna may have a tolerance for varying frequencies to meet optimal radiation efficiency. Also, the shape of the loop antenna may be circular, elliptical, rectangular, or other geometric shape. Furthermore, a feed point connecting a transmission line(s) and the antenna electrode may be located on the antenna other than the position of the feed 103 shown in FIGs. 3A-3D.

As shown in FIGs. 3A-3B, the loop antenna electrode may be a monopole antenna, that is, the antenna electrode 101 includes one feed 103. In FIG. 3A, the monopole antenna is a closed loop antenna. In one example, the internal perimeter may be around 20-35 mm and the external perimeter may be 25-40 mm, while the external perimeter is greater than the internal perimeter. In FIG. 3B, the monopole antenna is an open loop antenna. As shown in FIGs. 3C-3D, the loop antenna is a dipole antenna, that is, the antenna electrode 101 includes two feeds 103. In FIG. 3C, the dipole antenna is a closed loop antenna. In FIG. 3D, the dipole antenna is an open loop antenna. It is contemplated that the impedance of the antenna electrode should be matched with the transceiver module under certain working conditions.

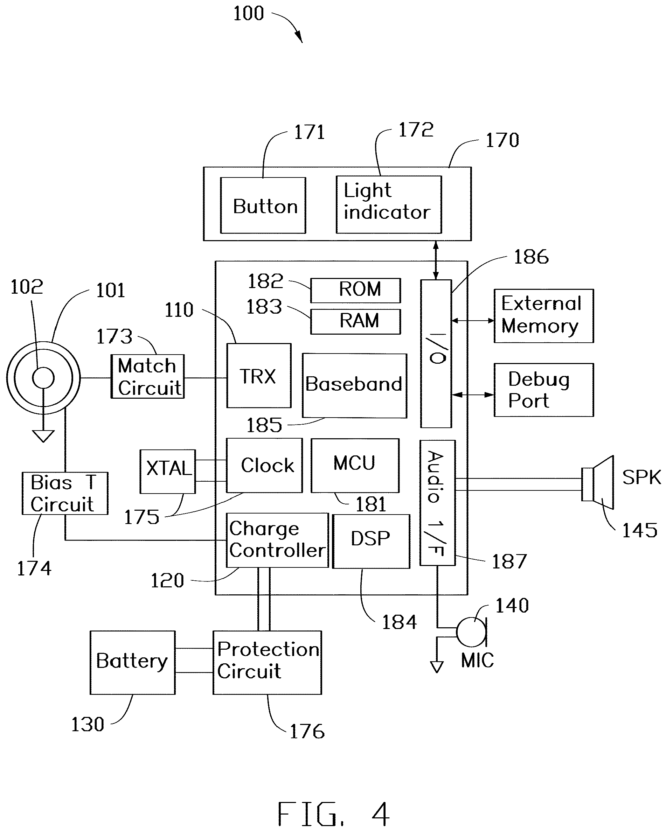

In an exemplary embodiment of the radiofrequency communication device, as shown in FIG. 4, the radiofrequency communication device is embodied as a wireless earphone 100. The wireless earphone 100 includes an antenna electrode 101, a charging electrode 102, a transceiver module 110, a charge controller 120, and a battery 130. The charging electrode 102 is coupled to the charge controller 120. The battery 130 is coupled to the charge controller 120. The antenna electrode 101 is coupled to the transceiver module 110 (TRX) and the charge controller 120. The antenna electrode 101 is coupled to the transceiver module 110 thorough a match circuit 173 to ensure a matching impedance between the antenna electrode 101 and the transceiver module 110. The antenna electrode 101 is coupled to the charger controller 120 through a bias T circuit 174 to shunt direct electric current to the charger controller 120 when the wireless earphone 100 is in use to recharge the battery 130. The bias T circuit 174 may also be coupled to the transceiver module 110 to shunt radiofrequency current to the transceiver module 110. The transceiver module 110 may be embodied as a BLUETOOTH radio frequency (BTRF). In at least one example, the bias T circuit 174 may be replaced by a switching module, and the switching module is coupled to the transceiver module 110.

The wireless earphone may further include a microcontroller 181, a memory including a read-only memory 182 (ROM) and a random access memory 183 (RAM), a digital signal processor 184 (DSP), a baseband module 185, an input/output device 186 (I/O device), an audio interface 187, a user interface 170, a microphone 140 (MIC), a speaker 145 (SPK), a crystal (XTAL) clock 175 and a protection circuit 176. In at least one example, a part of these electronic components may be embedded on a printed circuit board for ease of mass production and volume minimization of the wireless earphone. Moreover, the user interface 170 may include a button 171 configured to receive users' input, and the user interface 170 may also include a light indicator 172 configured to deliver indicating signals to users. The microphone 140 may be coupled to the audio interface 187 to receive environmental sound or the user's voice. The audio interface 187 may have noise cancellation function to eliminate ambient noise so that the speaker 145 is capable of delivering high quality sound or may amplify certain frequencies of sound, for example, human speech. With the microphone 140, the wireless earphone 100 may serve as a wireless intercom, a hearing aid, or a sound amplifying device.

The present application further discloses a charging system and applications thereof.

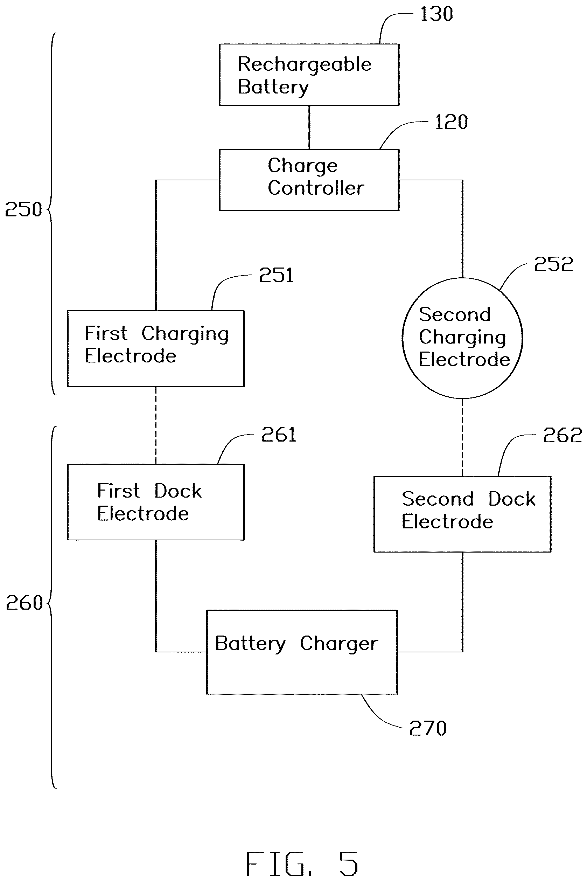

FIG. 5 shows an exemplary embodiment of the charging system of the present disclosure. The charging system may include a first charging module 250 and a second charging module 260. The first charging module 250 includes a first charging electrode 251, a second charging electrode 252, a charge controller 120, and a rechargeable battery 130. The second charging module 260 includes a first dock electrode 261, a second dock electrode 262, and a battery charger 270. The first charging electrode 251 and the second charging electrode 252 are coupled to the cathode or the anode of the charge controller 120. The first dock electrode 261 and the second dock electrode 262 are coupled to the cathode or the anode of the battery charger 270. The dotted lines shown in FIG. 5 indicate electrical connections between the first charging electrode 251 and the first dock electrode 261, and electrical connections between the second charging electrode 252 and the second dock electrode 262 when a charging circuit is complete.

The charging system may be applied in an electronic device, which includes a rechargeable device and a charging case. The first charging module 250 is applied to the rechargeable device, and the second charging module 260 is applied to the charging case. The rechargeable device may include a rechargeable battery, a charge controller, a first charging electrode, a second charging electrode, and a device housing. The rechargeable battery is coupled to the charge controller. The charge controller is coupled to both the first charging electrode and the second charging electrode. The device housing is configured to accommodate the rechargeable battery, the charge controller, the first charging electrode, and the second charging electrode. The charging case may include a battery charger, a first dock electrode, a second dock electrode, and a case housing. The battery charger is coupled to the first dock electrode and the second dock electrode. The case housing is configured to accommodate the battery charger, the first dock electrode, and the second dock electrode. When the rechargeable system is under charging process, the rechargeable device is coupled to the charging case by contacting the first charging electrode to the first dock electrode, and contacting the second charging electrode to the second dock electrode. In this situation, the first charging electrode is coupled to the first dock electrode and the second charging electrode is coupled to the second dock electrode.

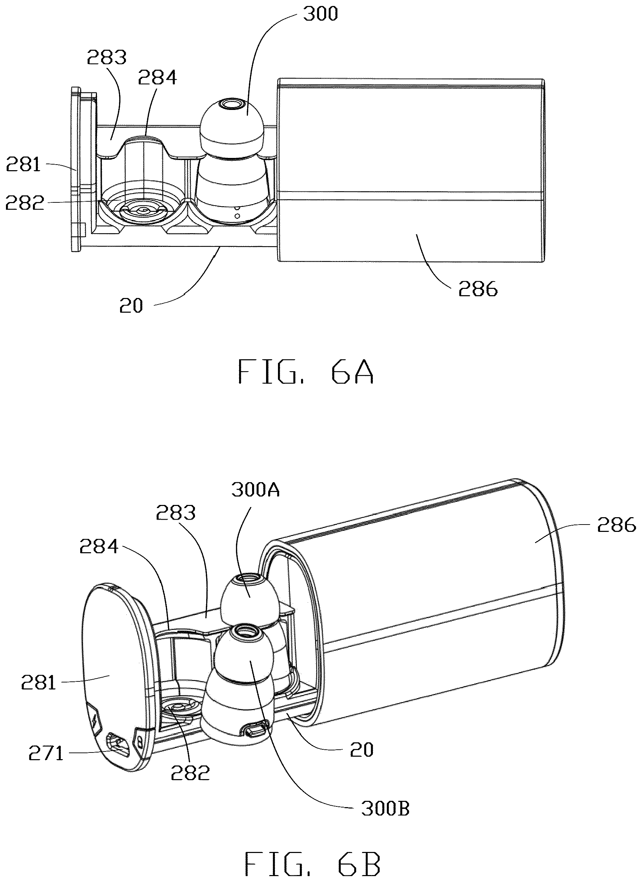

FIG. 6A shows an exemplary embodiment of the electronic device, which includes a rechargeable wireless earphone 300 and a charging case 20. The charging case 20 is configured to recharge the battery of the rechargeable wireless earphone 300. The charging case 20 includes a charging assembly 281 and a container 286, and the charging assembly 281 could be accommodated in the container 286. In the present embodiment, the charging assembly 281 is configured to a drawer. The charging assembly 281 includes a dock base 282 and a dock rack 283. The dock base 282 is configured to provide mechanical connection to a device housing of the rechargeable wireless earphone 300. The dock rack 283 has a neck portion 284 to support and stabilize the device housing of the rechargeable wireless earphone 300. In FIG. 6A, the charging case 20 is shown in an open position and one rechargeable wireless earphone 300 is located on the dock rack 283 of the charging assembly 281. In at least one example, the dock rack 283 may have two neck portions 284 for two rechargeable wireless earphones.

FIG. 6B shows another exemplary embodiment of the electronic device similar to FIG. 6A, which includes a pair of rechargeable wireless earphones 300a and 300b, and a charging case 20. The charging case 20 is configured to recharge the battery of the rechargeable wireless earphones 300a and 300b. The charging case 20 includes a power management module (not shown), a rechargeable battery (not shown), and an external power connection port 271. The external power connection port 271 is configured to receive external electric power to recharge the rechargeable battery of the charging case 20. The external power connection port 271 could be a universal serial bus (USB) port or a micro-USB port. The charging case 20 includes a charging assembly 281 and a container 286, and the charging assembly 281 could be accommodated in the container 286. In the present embodiment, the charging assembly 281 is configured to a drawer. The charging assembly 281 of the charging case 20 includes a dock base 282 and a dock rack 283. Moreover, each of the rechargeable wireless earphones 300a and 300b is provided with a first charging module 250, which includes a first charging electrode 251 and a second charging electrode 252, as described in previous paragraphs related to FIG. 5. The charging case 20 is provided with at least one second charging module 260, which includes at least a first dock electrode 261 and a second dock electrode262. The positions of the first dock electrode261 and the second dock electrode 262 are fixed to the dock base 282. When the rechargeable wireless earphones 300a and 300b are electrically coupled to the charging case 20, the dock base 282 could provide mechanical connection to a device housing of the rechargeable wireless earphones 300a and 300b. Meanwhile, the first dock electrode 261 is electrically coupled to the first charging electrode 251, and the second dock electrode 262 is electrically coupled to the second charging electrode 252, thereby providing electrical connections between the charging case 20 and the rechargeable wireless earphones 300a and 300b. The dock rack 283 may have a neck portion 284 to support and stabilize the device housing of the rechargeable wireless earphone. In the present embodiment, the charging electrodes of the first charging module 250 and the dock electrodes of the second charging module 260 are radically symmetrical. As a result, users may place the rechargeable wireless earphone on the charging case in an arbitrary direction or orientation.

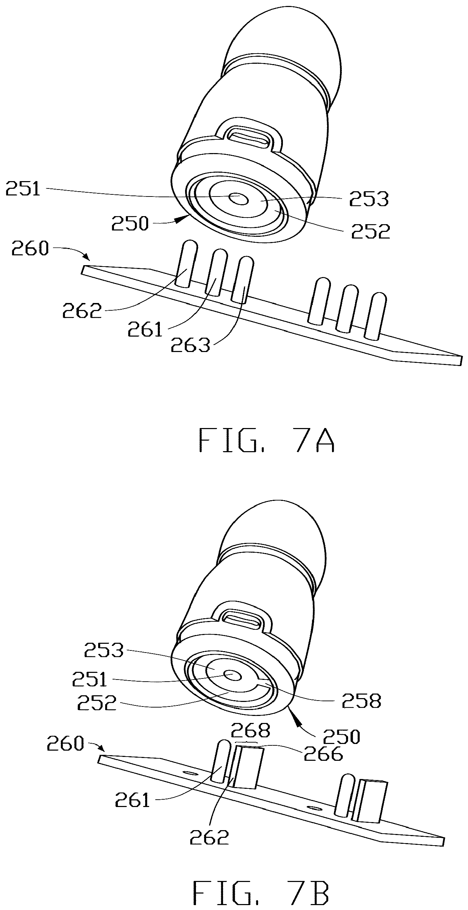

FIG. 7A shows an exemplary embodiment of the charging system of FIG. 6B, which includes a first charging module 250 and a second charging module 260. The first charging module 250 includes a first charging electrode 251 and a second charging electrode 252. The second charging module 260 includes a first dock electrode 261, a second dock electrode 262, and a third dock electrode 263. The first charging electrode 251 may be a conductive pin with a spring cushion to ensure electrical connections between the first charging electrode 251 and the first dock electrode 261 when the first charging module 250 and the second charging module 260 are electrically coupled. The first charging electrode 251 is surrounded by the second charging electrode 252. In the present embodiment, the second charging electrode 252 is annular. The first charging module may further include an annular insulation wall 253, which prevents short circuiting between the first charging electrode 251 and the second charging electrode 252. When the first charging module 250 and the second charging module 260 are electrically coupled, the insulation wall 253 of the first charging module 250 may also provide mechanical support to ensure correct contact between the first dock electrode 261 and the first charging electrode 251. The insulation wall 253 also prevents the first dock electrode 261 from contacting the second charging electrode 252. When the first charging module 250 and the second charging module 260 are electrically coupled, electrical connections by the second dock electrode 262 and the third dock electrode 263 to the second charging electrode 252 are assured. As a result, the first charging module 250 and the second charging module 260 could complete a charging circuit regardless of the placement or orientation. Moreover, the second charging electrode 252 could be a closed-loop antenna electrode to provide communication functions. Descriptions of the antenna electrode have been given previously.

FIG. 7B shows another exemplary embodiment of the charging system of FIG. 6B, which includes a first charging module 250 and a second charging module 260. The first charging module 250 includes a first charging electrode 251 and a second charging electrode 252. The second charging module 260 includes a first dock electrode 261 and a second dock electrode 262. The second charging electrode 252 is arranged around the first charging electrode 251. In the present embodiment, the second charging electrode 252 is annular and a gap 258 is defined in the second charging electrode 252. As shown in FIG. 7B, the second charging electrode 252 has two ends spaced apart by the gap 258. The second dock electrode 262 is configured to be a certain shape to ensure electrical connections between the second dock electrode 262 and the second charging electrode 252 regardless of the connecting direction. The second dock electrode 262 has a surface 266 configured to contact the second charging electrode 252 when the first charging module 250 and the second charging module 260 are electrically coupled. The surface 266 has a width 268, and the width 268 of the second dock electrode 262 is equal to or greater than the gap 258 (a distance between the two ends) of the second charging electrode 252. When the first charging module 250 and the second charging module 260 are electrically coupled, the surface 266 of the second dock electrode 262 could either contact the second charging electrode 252 across the gap 258, or contact a main portion of the second dock electrode 262 away from the gap 258. It should be noted that although in the present exemplary embodiment, the second dock electrode 262 is a curved cuboid, but the shape of the second dock electrode 262 is not limited thereto.

Referring to the exemplary embodiment shown in FIG. 7B, the first charging electrode 251 may be a conductive pin with a spring cushion to ensure good electrical connections between the first charging electrode 251 and the first dock electrode 251 when the first charging module 250 and the second charging module 260 are electrically coupled. The first charging module includes an annular insulation wall 253, which prevents the first charging electrode 251 and the second charging electrode 252 from short circuiting. When the first charging module 250 and the second charging module 260 are electrically coupled, the insulation wall 253 may also provide mechanical support to ensure that the location of the first dock electrode 261 is correctly in contact with the first charging electrode 251. The insulation wall 253 also prevents the first dock electrode 261 from contacting the second charging electrode 252. This arrangement ensures that the first charging module 250 and the second charging module 260 could complete a charging circuit regardless of the manner of their placement direction or orientation. In addition, the second charging electrode 252 could be an open-loop antenna electrode to provide further communication functions. Descriptions of the antenna electrode have been given previously.

The present disclosure provides an antenna electrode and a radio frequency communication device using the antenna electrode. The present disclosure further provides a charging system and an electronic device using the charging system. The embodiments mentioned above only specifically describe a few embodiments of the present disclosure in detail, which should not be understood as a limitation to the scope of the present disclosure. For one of the ordinary skill in the art, variations and improvements can be made based on the present disclosure, all of which belong to the scope of the present disclosure.

## Claims

1. A charging system comprising:
a first charging module and a second charging module;
wherein the first charging module comprises:
a first charging electrode, a second charging electrode, a charge controller and at least one rechargeable battery, the first charging electrode and the second charging electrode are coupled to the charge controller, the charge controller is coupled to the rechargeable battery, the second charging electrode is substantially annular, and the first charging electrode is surrounded by the second charging electrode;
wherein the second charging module comprises:
a first dock electrode, a second dock electrode and a battery charger, the first dock electrode and the second dock electrode are coupled to the battery charger;
wherein when the first charging module and the second charging module are electrically coupled, the first charging electrode is electrically coupled to the first dock electrode, and the second charging electrode is electrically coupled to the second dock electrode.

2. The charging system of claim 1, wherein the first charging electrode is a conductive pin with a spring cushion.

3. The charging system of claim 1, where the first charging module further comprises an insulation wall to prevent the first charging electrode and the second charging electrode from short circuiting, and the insulation wall is arranged between the first charging electrode and the second charging electrode.

4. The charging system of claim 1, wherein the second charging module further comprising a third dock electrode, when the first charging module and the second charging module are electrically coupled the third dock electrode is electrically coupled to the second charging electrode.

5. The charging system of claim 4, wherein the second charging electrode is a closed-loop antenna electrode.

6. The charging system of claim 1, wherein the second dock electrode comprises a surface configured to contact to the second charging electrode when the first charging module and the second charging module are electrically coupled, the surface comprises a width, the second charging electrode comprises two ends spaced apart by a gap, the gap comprises a distance, and the width is greater than the distance between the two ends.

7. The charging system of claim 6, wherein the second charging electrode is an open-loop antenna electrode.

8. The charging system of claim 1, wherein the second charging electrode is an antenna electrode, and a perimeter of the second charging electrode is equal to or is one quarter of a predetermined wavelength of electromagnetic wave.

9. The charging system of claim 8, wherein an internal perimeter of the second charging electrode is in a range of 20 - 35 millimeter, an external perimeter of the second charging electrode is in a range of 25 - 40 millimeter, and the external perimeter is greater than the internal perimeter.

10. The charging system of claim 8, wherein the first charging module further comprises a transceiver module, the second charging electrode is coupled to the transceiver module and the charge controller, and the second charging electrode is configured to receive electrical power from the transceiver module or to transmit electrical power to the transceiver module.

11. The charging system of claim 10, wherein the first charging module further comprises a switching module, the second charging electrode is coupled to the transceiver module and the charge controller through the switching module, the switching module is configured to switch between a charging mode and a communication mode of the first charging module.

12. An electronic device comprising a rechargeable radiofrequency communication device and a charging case,
the rechargeable radiofrequency communication device comprising a first charging module, wherein the first charging module comprises:
a first charging electrode, a second charging electrode, a transceiver module, a charge controller and at least one rechargeable battery, the first charging electrode is coupled to the charge controller, the second charging electrode is coupled to the transceiver module and the charge controller, the charge controller is coupled to the rechargeable battery, the first charging electrode is surrounded by the second charging electrode, the second charging electrode is substantially annular, and the second charging electrode is an antenna electrode to receive electrical power from the transceiver module or to transmit electrical power to the transceiver module; and
the charging case comprising a second charging module, wherein the second charging module comprises:
a first dock electrode, a second dock electrode and a battery charger, the first dock electrode and the second dock electrode are coupled to the battery charger;
wherein when the rechargeable radiofrequency communication device and the charging case are electrically coupled, the first charging electrode is electrically coupled to the first dock electrode, and the second charging electrode is electrically coupled to the second dock electrode.

13. The electronic device of claim 12, wherein the first charging electrode is a conductive pin with a spring cushion.

14. The electronic device of claim 12, wherein the first charging module further comprises an insulation wall to prevent the first charging electrode and the second charging electrode from short circuiting, and the insulation wall is arranged between the first charging electrode and the second charging electrode.

15. The electronic device of claim 12, wherein the second charging module further comprising a third dock electrode, when the first charging module and the second charging module are electrically coupled the third dock electrode is electrically coupled to the second charging electrode.

16. The electronic device of claim 12, wherein the second dock electrode comprises a surface configured to contact to the second charging electrode when the first charging module and the second charging module are electrically coupled, the surface comprises a width, the second charging electrode comprises two ends spaced apart by a gap, the gap comprises a distance, and the width is greater than the distance between the two ends.

17. The electronic device of claim 12, wherein the second charging electrode is a monopole antenna or a dipole antenna.

18. The electronic device of claim 12, wherein the first charging module further comprises a switching module, the second charging electrode is coupled to the transceiver module and the charge controller through the switching module, the switching module is configured to switch between a charging mode and a communication mode of the first charging module.

19. The electronic device of claim 18, wherein in the charging mode, the switching module allows electrical connections between the second charging electrode and the charge controller, and the switching module reduces electrical connections between the second charging electrode and the transceiver module.

20. The electronic device of claim 18, wherein in the communication mode, the switching module allows electrical connections between the second charging electrode and the transceiver module, and the switching module reduces electrical connections between the second charging electrode and the charge controller.
